# EUROPEAN PATENT APPLICATION

(11) **EP 3 309 208 A1**
(43) Date of publication of application: **18.04.2018**
(21) Application number: 16807098.5
(22) Date of filing: 03.06.2016
(51) Int. Cl.: C08L 11/00, C08K 3/04, C08K 3/36, C08K 5/521, C08L 9/00, C08L 91/08, F16L 11/08

(54) **RUBBER COMPOSITION FOR HOSE, AND HOSE**

(30) Priority: 09.06.2015 JP 2015117001
(71) Applicant: Bridgestone Corporation, Tokyo 104-8340 (JP)
(72) Inventor: TSUNENISHI, Youhei, Tokyo 104-8340 (JP)
(74) Representative: Oxley, Robin John George
(86) International application number: PCT/JP2016/002700
(87) International publication number: WO 2016/199388

(57) **Abstract**

The hose rubber composition of this disclosure comprises a rubber component, a carbon black and a plasticizer component, wherein: a chloroprene rubber is contained at an amount of 60 parts by mass or more in 100 parts by mass of the rubber component; the carbon black is compounded at an amount of more than 50 parts by mass in 100 parts by mass of the rubber component; and the plasticizer component contains a flame retardant plasticizer, the flame retardant plasticizer being compounded at an amount of 2 parts by mass or more in 100 parts by mass of the rubber component.

## Description

### TECHNICAL FIELD

This disclosure relates to a hose rubber composition and a hose.

### BACKGROUND

Research has been conventionally conducted to improve the weather resistance, fatigue resistance, abrasion resistance, etc. of hydraulic hoses used in construction machines and the like (for example, see Patent Literature (PTL) 1).

Hydraulic hoses have been increasingly used in mines such as coal mines in recent years, and required to have improved flame retardance for safety during work. For example, flame retardance required of hydraulic hoses is mainly defined by the MSHA (Mine Safety and Health Administration) standard in the United States.

Moreover, with the use of very large hydraulic excavator in recent years, large-diameter high-pressure hoses have been increasingly used in harsher use environments. This has created the tendency to demand hoses with high pressure resistance and long life.

Conventional flame-retardant outer cover rubber is, however, not suitable for long-term use, as an increase in bending stress due to large diameter may cause an outer cover crack after long-term use.

Regarding chloroprene rubber from which vulcanized rubber used in automobile rubber members, hoses, rubber molded objects, and rubber vibration isolators is obtained, research has been conducted to further improve heat resistance without impairing mechanical properties, compression set, and elongation fatigue performance (for example, see PTL 2).

However, a rubber capable of ensuring the flame retardance and simultaneously achieving both the softness after vulcanization and the dimensional stability during extrusion manufacture has not been attained, of which development is strongly desired.

### CITATION LIST

### Patent Literature

PTL1: JP2010-121006A
PTL2: WO2009/035109A1

### SUMMARY

### (Technical Problem)

Then, this disclosure aims to provide a hose rubber composition capable of ensuring the flame retardance and simultaneously achieving both the softness after vulcanization and the dimensional stability during extrusion manufacture. Moreover, this disclosure aims to provide a hose capable of ensuring the flame retardance and simultaneously achieving both the softness and the dimensional stability of the product outer diameter.

### (Solution to Problem)

We accomplished this disclosure as a result of discovering that: (i) in a rubber composition with a large content of a filler such as carbon black and the like, by compounding a plasticizer and setting a content of the plasticizer to a large value, based on content increase of the filler, it is possible to prevent deterioration of the elongation (softness) and deterioration of the crack resistance due to its curing; (ii) by reducing a polymer fraction in a rubber composition based on the content increase of the filler and the plasticizer, it is possible to improve the dimensional stability in processing; and (iii) by containing a flame retardant plasticizer as the plasticizer, it is possible to suppress deterioration of the flame retardance due to the content increase of the plasticizer in the rubber composition.

The hose rubber composition of this disclosure comprises a rubber component, a carbon black and a plasticizer component, wherein: a chloroprene rubber is contained at an amount of 60 parts by mass or more in 100 parts by mass of the rubber component; the carbon black is compounded at an amount of more than 50 parts by mass per 100 parts by mass of the rubber component; and the plasticizer component contains a flame retardant plasticizer, the flame retardant plasticizer being compounded at an amount of 2 parts by mass or more per 100 parts by mass of the rubber component.

### (Advantageous Effect)

According to this disclosure, it is possible to provide a hose rubber composition capable of ensuring the flame retardance and simultaneously achieving both the softness after vulcanization and the dimensional stability during extrusion manufacture. Moreover, according to this disclosure, it is possible to provide a hose capable of ensuring the flame retardance and simultaneously achieving both the softness and the dimensional stability of the product outer diameter.

### BRIEF DESCRIPTION OF THE DRAWINGS

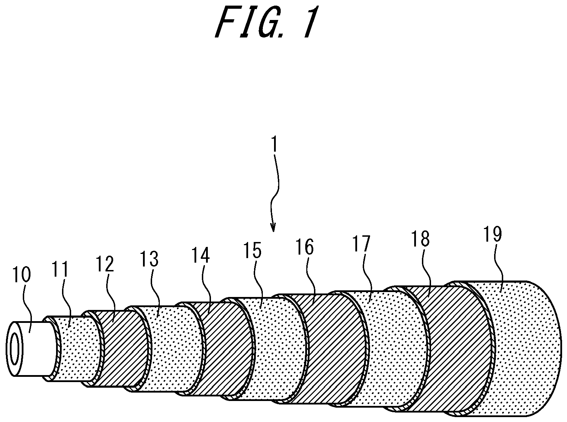

FIG. 1 illustrates a perspective view of an example of a laminate structure of a hose of an embodiment according to this disclosure, which uses a hose rubber composition of an embodiment according to this disclosure.

### DETAILED DESCRIPTION

In the present Specification, the "flame retardance" refers to a flame retardance measured in an MSHA retardance test.

### (Hose rubber composition)

Hereinafter, the hose rubber composition of this disclosure is described in details based on its embodiment.

The disclosed hose rubber composition includes at least a rubber component, a carbon black and a plasticizer component, and further includes silica and other components when necessary.

### <Rubber component>

The rubber component at least contains a chloroprene rubber (CR), and further contains a styrene-butadiene rubber (SBR), a butadiene rubber (BR) or another polymer when necessary.

In the hose rubber composition of this disclosure, it is preferable that the rubber component further contains at least any one of a styrene-butadiene rubber and a butadiene rubber. According to this configuration, it is possible to avoid deterioration of the abrasion resistance of the hose rubber composition, or it is possible to improve the processability (the dimensional stability of extrusion and the extruded surface characteristics).

### «Chloroprene rubber (CR)»

The chloroprene rubber (CR) is a homopolymer (chloroprene polymer) of a chloroprene monomer or a copolymer (hereinafter referred to as the chloroprene-based copolymer) obtained by polymerizing a mixture of a chloroprene monomer and at least one type of other monomer copolymerizable with the chloroprene monomer (hereinafter referred to as the chloroprene-based monomer).

### -Classification of chloroprene rubber-

The chloroprene rubber is classified as sulfur-modified type, mercaptan-modified type, or xanthogen-modified type, according to the type of a molecular weight regulator.

The chloroprene rubber may be any of the modified types. The sulfur-modified type is, however, lower in heat resistance of the polymer itself than the mercaptan-modified type and the xanthogen-modified type, and accordingly the mercaptan-modified type or the xanthogen-modified type is preferably used in the case where higher heat resistance is required.

### --Sulfur-modified type--

The sulfur-modified type is a type that plasticizes, with thiuram disulfide, a polymer which is the result of copolymerizing sulfur and the chloroprene monomer or the chloroprene-based monomer, and adjusts it to predetermined Mooney viscosity.

### --Mercaptan-modified type--

The mercaptan-modified type is a type that uses alkylmercaptan such as n-dodecylmercaptan, tert-dodecylmercaptan, or octylmercaptan as a molecular weight regulator.

### --Xanthogen-modified type--

The xanthogen-modified type uses an alkylxanthogen compound as a molecular weight regulator. The alkylxanthogen compound is not particularly limited, and may be selected as appropriate depending on the purpose. Examples include dimethylxanthogen disulfide, diethylxanthogen disulfide, diisopropylxanthogen disulfide, and diisobutylxanthogen disulfide. These may be used singly or in a combination of two or more.

The amount of the alkylxanthogen compound used is not particularly limited as long as the molecular weight (or Mooney viscosity) of the chloroprene rubber is proper, and may be selected as appropriate depending on the purpose (the structure of the alkyl group or the target molecular weight). The amount of the alkylxanthogen compound used is preferably 0.05 parts to 5.0 parts by mass and more preferably 0.3 parts to 1.0 parts by mass per 100 parts by mass of the chloroprene monomer or the chloroprene-based monomer.

### -Content of chloroprene rubber (CR)-

The content of the chloroprene rubber (CR) is not particularly limited as long as it is 60 parts by mass or more in 100 parts by mass of the rubber component, and may be selected as appropriate depending on the purpose. The content of the chloroprene rubber (CR) is preferably 60 parts to 90 parts by mass, and more preferably 65 parts to 80 parts by mass.

When the content of the chloroprene rubber (CR) is less than 60 parts by mass in 100 parts by mass of the rubber component, the flame retardance cannot be ensured. On the other hand, the content of the chloroprene rubber (CR) within the aforementioned preferable range is advantageous from the viewpoint of the flame retardance, the processability (shelf stability), the oil resistance and the weather resistance, and more advantageous within the more preferable range.

### «Styrene-butadiene rubber (SBR)»

The styrene-butadiene rubber (SBR) is a copolymer (styrene-butadiene copolymer) of a styrene monomer and a butadiene monomer, or a copolymer (hereafter referred to as a styrene-butadiene-based copolymer) obtained by polymerizing a mixture (hereafter referred to as a styrene-butadiene-based monomer) of a styrene monomer, a butadiene monomer, and at least one type of other monomer copolymerizable with the styrene monomer and the butadiene monomer.

By compounding the styrene-butadiene rubber (SBR), it is possible to avoid deterioration of the abrasion resistance, and to simultaneously improve the processability (the dimensional stability of extrusion and the extruded surface characteristics).

### -Monomer copolymerizable with styrene monomer and butadiene monomer-

The monomer copolymerizable with the styrene monomer and the butadiene monomer is not particularly limited, and may be selected as appropriate depending on the purpose. Examples include: conjugated diene monomers having 5 to 8 carbon atoms such as 2-methyl-1,3-butadiene, 2,3-dimethyl-1,3-butadiene, 1,3-pentadiene, and 1,3-hexadiene; and aromatic vinyl monomers such as p-methylstyrene, α-methylstyrene, and vinylnaphthalene. These may be used singly or in a combination of two or more.

### -Styrene content of styrene-butadiene rubber (SBR)-

The styrene content of the styrene-butadiene rubber (SBR) is not particularly limited, and may be selected as appropriate depending on the purpose. The styrene content of the styrene-butadiene rubber (SBR) is preferably 20% to 45% by mass, and more preferably 20% to 35% by mass.

When the styrene content of the styrene-butadiene rubber (SBR) is 20% by mass or more, sufficient effect of preventing a decrease in processability may be attained. When the styrene content of the styrene-butadiene rubber (SBR) is 45% by mass or less, sufficient effect of preventing a decrease in abrasion resistance may be attained. On the other hand, the styrene content of the styrene-butadiene rubber (SBR) within the more preferable range is more advantageous from the viewpoint of the processability and the abrasion resistance.

### -Content of styrene-butadiene rubber (SBR)-

The content of the styrene-butadiene rubber (SBR) is not particularly limited, and may be selected as appropriate depending on the purpose as long as it is 40 parts by mass or less in 100 parts by mass of the rubber component. The content of the styrene-butadiene rubber (SBR) is preferably 10 parts to 40 parts by mass.

If the content of the styrene-butadiene rubber (SBR) is more than 40 parts by mass in 100 parts by mass of the rubber component, the ratio of the chloroprene rubber (CR) is reduced, which deteriorates the flame retardance. On the other hand, the content of the styrene-butadiene rubber (SBR) within the preferable range is more advantageous from the viewpoint of the flame retardance, the abrasion resistance and the processability (the dimensional stability of extrusion and the extruded surface characteristics).

### «Butadiene rubber (BR)»

The butadiene rubber (BR) is a homopolymer of a butadiene monomer (butadiene polymer) or a copolymer (hereinafter referred to as the butadiene-based copolymer) obtained by polymerizing a mixture of a butadiene monomer and at least one type of other monomer copolymerizable with the butadiene monomer (hereinafter referred to as the butadiene-based monomer). The butadiene rubber (BR) may be terminal-modified.

By compounding the butadiene rubber (BR), it is possible to improve the abrasion resistance.

### -Cis-1,4 bond content of butadiene rubber (BR)-

The cis-1,4 bond content of the butadiene rubber (BR) is not particularly limited, and may be selected as appropriate depending on the purpose. The cis-1,4 bond content is preferably 90% or more, more preferably 93% or more, and particularly preferably 95% or more.

If the butadiene rubber has a cis-1,4 bond content of less than 90% and is not terminal-modified, there are cases where the abrasion resistance improvement effect cannot be attained sufficiently. On the other hand, the cis-1,4 bond content within the more preferable range or a terminal-modified BR even if the cis-1,4 bond content is less than 90% is advantageous from the viewpoint of the abrasion resistance, more advantageous if within the particularly preferable range.

Note that the cis-1,4 bond content may be measured by using ¹H-NMR, ¹³C-NMR, FT-IR, etc.

### -Content of butadiene rubber (BR)-

The content of the butadiene rubber (BR) is not particularly limited, and may be selected as appropriate depending on the purpose as long as it is 40 parts by mass or less in 100 parts by mass of the rubber component. The content of the butadiene rubber (BR) is preferably 10 parts to 40 parts by mass.

If the content of the butadiene rubber (BR) is more than 40 parts by mass in 100 parts by mass of the rubber component, the ratio of the chloroprene rubber (CR) is reduced, which deteriorates the flame retardance. On the other hand, the content of the butadiene rubber (BR) within the aforementioned preferable range is advantageous from the viewpoint of the flame retardance and the abrasion resistance.

### «Other polymers»

The other polymer is not particularly limited, and may be selected as appropriate depending on the purpose. Examples include natural rubber (NR),butyl rubber (IIR), chlorosulfonated polyethylene (CSM), chlorinated polyethylene (CPE), acrylonitrile butadiene rubber (NBR), hydrogenated acrylonitrile-butadiene rubber (H-NBR), acrylic rubber (ACM), ethylene-propylene rubber (EPDM), epichlorohydrin rubber (CO), hydrin rubber (ECO), silicone rubber (Q), fluororubber (FKM), polyvinyl chloride (PVC), blend rubber of polyvinyl chloride (PVC) and acrylonitrile butadiene rubber (NBR) (NV) (corresponding to "a mixture of polyvinyl chloride and acrylonitrile butadiene rubber"), and chlorinated natural rubber. These may be used singly or in a combination of two or more.

Of these, CSM and CPE are preferable from the viewpoint of flame retardance.

### <Carbon black>

The carbon black can ensure the reinforcement performance and the flame retardance by being compounded to the rubber component.

The carbon black is not specifically limited and may be selected as appropriate depending on the purpose. Examples include FEF class, HAF class, ISAF class, SAF class, GPF class, SRF class, FT class and MT class. These may be used singly or in a combination of two or more.

Among these, from the viewpoint of the balance among the abrasion resistance, the initial elongation (crack resistance) and the processability, FEF class (iodine adsorption: 40 to 60 mg/g (g/kg), DBP oil absorption: 100 to 130 mL/100g (100×10⁻⁵ m³/kg to 130×10⁻⁵ m³/kg) is desirable.

The iodine adsorption of the carbon black is not specifically limited and may be selected as appropriate depending on the purpose. The iodine adsorption of the carbon black is preferably 20 to 160 mg/g, more preferably 40 to 60 mg/g.

The iodine adsorption of the carbon black within the aforementioned preferable range is advantageous from the viewpoint of the balance among the abrasion resistance, the processability and the elongation after heat-aging resistance, more advantageous within the aforementioned more preferable range.

The DBP oil absorption of the carbon black is not specifically limited and may be selected as appropriate depending on the purpose. The DBP oil absorption of the carbon black is preferably 30 to 150 mL/100g, more preferably 100 to 130 mL/100g.

The DBP oil absorption of the carbon black within the aforementioned preferable range is advantageous from the viewpoint of the balance among the abrasion resistance, the processability and the elongation after heat-aging resistance, more advantageous within the aforementioned more preferable range.

It is preferable that the carbon black has an iodine adsorption of 20 to 160 mg/g and a DBP oil absorption of 30 to 150 mL/100g, more preferably an iodine adsorption of 30 to 100 mg/g and a DBP oil absorption of 50 to 130 mL/100g, particularly preferably an iodine adsorption of 40 to 60 mg/g and a DBP oil absorption of 100 to 130 mL/100g. According to this configuration, it is possible to ensure the abrasion resistance and the processability of the hose rubber composition.

The iodine adsorption and the DBP oil absorption of the carbon black within the aforementioned preferable range is advantageous from the viewpoint of the balance among the abrasion resistance, the processability and the elongation after heat-aging resistance, more advantageous within the aforementioned more preferable range or the particularly preferable range.

The method of measuring the iodine adsorption and the method of measuring the DBP oil absorption comply with JIS K 6217.

### -Compounding amount of carbon black-

The compounding amount of the carbon black is not specifically limited and may be selected as appropriate depending on the purpose as long as it is more than 50 parts by mass per 100 parts by mass of the rubber component. The compounding amount of the carbon black is preferably 65 to 75 parts by mass per 100 parts by mass of the rubber component.

If the compounding amount of the carbon black is 50 parts by mass or less per 100 parts by mass of the rubber component, the dimensional stability during extrusion cannot be ensured. On the other hand, the compounding amount of the carbon black within the aforementioned preferable range is advantageous from the viewpoint of the flame retardance and the dimensional stability.

In the hose rubber composition of this disclosure, it is preferable that the carbon black is compounded at an amount of 65 parts by mass or more per 100 parts by mass of the rubber component. According to this configuration, it is possible to exhibit better flame retardance and dimensional stability.

### <Silica>

By compounding the silica to the rubber component, it is possible to improve the flame retardance (in particular, shortens afterglow response), to improve the processability (the dimensional stability of extrusion and the extruded surface characteristics), and to maintain the abrasion resistance.

The nitrogen adsorption specific surface area (N₂SA) of the silica is not particularly limited, and may be selected as appropriate depending on the purpose. The nitrogen adsorption specific surface area (N₂SA) of the silica is preferably 70 m²/g to 300 m²/g, more preferably 100 m²/g to 280 m²/g, and particularly preferably 150 m²/g to 250 m²/g.

If the nitrogen adsorption specific surface area (N₂SA) of the silica is 70 m²/g or more, it is possible to attain sufficient effect of improvement of the flame retardance and the abrasion resistance, and if 300 m²/g or less, it is possible to attain sufficient effect of improvement of the dispersibility and the processability. On the other hand, the nitrogen adsorption specific surface area (N₂SA) of the silica within the more preferable range is advantageous from the viewpoint of the balance among the flame retardance, the abrasion resistance, the dispersibility and the processability, more advantageous within the particularly preferable range.

### -Compounding amount of silica-

The content of the silica is not particularly limited, and may be selected as appropriate depending on the purpose. The content of the silica is preferably 5 parts to 25 parts by mass and more preferably 15 parts to 25 parts by mass per 100 parts by mass of the rubber component.

If the compounding amount of the silica is 5 parts by mass or more, it is possible to avoid deterioration of the flame retardance (increase of the afterglow response), and if 25 parts by mass or less, it is possible to avoid excessive hardening. On the other hand, the content of the silica within the above-mentioned more preferable range is advantageous from the viewpoint of the processability (the dimensional stability of extrusion and the extruded surface characteristics), in the compounding ratio of each component.

In the hose rubber composition of this disclosure, it is further preferable that the silica is compounded at an amount of 5 parts to 25 parts by mass per 100 parts by mass of the rubber component. According to this configuration, it is possible to improve the flame retardance (in particular, shortens afterglow response), and to improve the processability (the dimensional stability of extrusion and the extruded surface characteristics).

### <Plasticizer component>

By compounding the plasticizer component to the rubber component, it is possible to improve the initial elongation (the softness and even the crack resistance).

The plasticizer component at least contains a flame retardant plasticizer, and further contains other paraffin-based oils such as spindle oil and the like, other aroma-based oils such as aroma oil and the like, naphthene-based oils, ester-based oils and other plasticizers when necessary.

### «Flame retardant plasticizer»

The flame retardant plasticizer is not specifically limited and may be selected as appropriate depending on the purpose. Examples include chlorinated aliphatic compounds such as chlorinated paraffin and the like; halogenated phosphate ester compounds and non-halogenated phosphate ester compounds; ester-based compounds; silicone-based compounds, etc. These may be used singly or in a combination of two or more.

The chlorinated paraffin is not specifically limited and may be selected as appropriate depending on the purpose. Specific examples include a chlorinated paraffin with a chlorination ratio of 43% (liquid), a chlorinated paraffin with a chlorination ratio of 50% (liquid), etc.

The halogenated phosphate ester compound is not specifically limited and may be selected as appropriate depending on the purpose. Specific examples include tris(chloropropyl)phosphate, condensate of tris(chloropropyl)phosphate and dialkylene glycol, etc.

The non-halogenated phosphate ester compound is not specifically limited and may be selected as appropriate depending on the purpose. Specific examples include triphenyl phosphate, tricresyl phosphate, etc.

The silicone-based compound is not specifically limited and may be selected as appropriate depending on the purpose. Specific examples include polydialkylsiloxane, etc.

In the hose rubber composition of this disclosure, it is preferable that the flame retardant plasticizer is at least any one among a chlorinated aliphatic compound and a phosphate ester compound, and it is more preferable that the flame retardant plasticizer is at least any one among a chlorinated paraffin and a halogenated phosphate ester compound. According to this configuration, it is possible to ensure the flame retardance of the hose rubber composition more securely, and to simultaneously achieve both the softness and the dimensional stability.

### -Compounding amount of flame retardant plasticizer-

The compounding amount of the flame retardant plasticizer is not specifically limited and may be selected as appropriate depending on the purpose as long as it is 2 parts by mass or more per 100 parts by mass of the rubber component. The compounding amount of the flame retardant plasticizer is preferably 2 parts to 25 parts by mass per 100 parts by mass of the rubber component.

If the compounding amount of the flame retardant plasticizer is less than 2 parts by mass per 100 parts by mass of the rubber component, for example, in the case where the amount of the chloroprene rubber or the carbon black is comparatively small, the flame retardance cannot be attained sufficiently. On the other hand, the compounding amount of the flame retardant plasticizer within the aforementioned preferable range is advantageous from the viewpoint of the balance among the flame retardance, the initial elongation (the softness and even the crack resistance) and the processability.

In the hose rubber composition of this disclosure, it is preferable that the flame retardant plasticizer is compounded at an amount of 2 parts to 25 parts by mass per 100 parts by mass of the rubber component. According to this configuration, it is possible to ensure the flame retardance of the hose rubber composition more securely, and simultaneously improve the dimensional stability.

### <Other components>

As the other components, compounding ingredients generally used in the rubber industry such as inorganic fillers other than the carbon black and the silica such as talc, clay, calcium carbonate and the like; vulcanizing agents such as peroxide vulcanizing agent and the like; vulcanization accelerators; vulcanization accelerator aids such as zinc oxide, stearic acid and the like; vulcanization retardants; age resistors; waxes; anti-scorch agents; softeners; adhesive aids such as silane coupling agent, organic acid salt (organic acid cobalt salt, etc.), resorcin, hexamethylenetetramine, melamine resin and the like; and metal compounds such as magnesium oxide, calcium oxide, calcium carbonate, aluminum hydroxide, magnesium hydroxide and the like may be selected as appropriate and compounded in a range not impairing the object of the disclosure. These compounding agents are preferably commercially available ones.

Note that the rubber composition can be manufactured by kneading, warming, extrusion, etc., with various compounding ingredients selected as appropriate when necessary compounded to a necessary component containing the rubber component, the carbon black and the plasticizer.

### (Hose)

The hose of this disclosure includes at least a rubber layer, and further includes one or more layers other than the rubber layer and other members when necessary.

The hose of this disclosure has a rubber layer using the hose rubber composition of this disclosure.

According to the hose of this disclosure, it is possible to ensure the flame retardance, and to simultaneously achieve both the softness and the dimensional stability during extrusion manufacture.

### -Rubber layer-

The rubber layer is made of the hose rubber composition of this disclosure. The part of the hose to which the rubber layer is applied is not particularly limited, and may be selected as appropriate depending on the purpose. For example, the part may be an intermediate rubber layer not forming the inner or outer surface of the hose and/or an outer surface rubber layer (outer cover rubber layer) forming the outer surface of the hose. The rubber layer is particularly preferably the outer surface rubber layer.

The shape, structure, and size of the outer surface rubber layer are not particularly limited, and may be selected as appropriate depending on the purpose.

The thickness of the outer surface rubber layer is not particularly limited, and may be selected as appropriate depending on the purpose. The thickness of the outer surface rubber layer is preferably 0.3 mm to 3.5 mm, more preferably 0.7 mm to 3.2 mm, and particularly preferably 1.0 mm to 3.0 mm.

When the thickness of the outer rubber layer is 0.3 mm or more, it is possible to avoid shorter life caused by abrasion. When the thickness of the rubber layer is 3.5 mm or less, it is possible to avoid lower flame retardance caused by an increased amount of fuel component, and to avoid degradation of the flexibility, lightweight property, or space saving property of the hose. On the other hand, the thickness of the outer rubber layer within the above-mentioned more preferable range is advantageous from the viewpoint of flame retardance and abrasion life, and the thickness of the rubber layer within the above-mentioned particularly preferable range is more advantageous from the viewpoint of flame retardance and abrasion life.

An example of the laminate structure of the hose of an embodiment according to this disclosure is as illustrated in FIG. 1. In FIG. 1, the hose 1 is a hydraulic hose having an inner surface rubber layer 10, reinforcement layers 12, 14, 16, and 18 having brass-plated wires, intermediate rubber layers 11, 13, 15, and 17, and an outer surface rubber layer 19.

The hose rubber composition of this disclosure is preferably used at least to the outer surface rubber layer 19, and may also be used to all or a part of the intermediate rubber layers 11, 13, 15, 17 and the outer surface rubber layer 19.

Although the structure of the hose illustrated here is made up of a plurality of layers by arranging the inner surface rubber layer 10, the four reinforcement layers 12, 14, 16, and 18, the four intermediate rubber layers 11, 13, 15, and 17, and the outer surface rubber layer 19 from inside, this is not a limitation. For example, the hose may have a three-layer structure in which an inner surface rubber layer, a reinforcement layer, and an outer surface rubber layer are stacked in order. The structure of the hose may be selected as appropriate depending on the required characteristics of the hose. Besides, the reinforcement layers need not be all made of brass-plated wires, and part of the reinforcement layers may be made of organic fibers. The hose may have a resin layer such as ultra high molecular weight polyethylene in its outermost layer to improve the abrasion resistance.

### <Method of manufacturing hose>

The method of manufacturing the hose of this disclosure includes, for example, the following inner tube extrusion step, wrapping step, outer cover extrusion step, resin mold coating step, vulcanization step, resin mold peeling step, and mandrel removal step, and further includes other steps selected as appropriate when necessary.

To exemplify with a hose with the structure of FIG. 1, first, a rubber composition for the inner surface rubber layer 10 is extruded onto the outside of a core body (mandrel) whose diameter is substantially the same as the hose inner diameter to coat the mandrel, thus forming the inner surface rubber layer 10 (inner tube extrusion step). A layer made of organic fibers may be introduced on the inner tube rubber layer 10, to prevent irregular winding when braiding wires. Next, a predetermined number of brass-plated wires are braided on the outside of the inner surface rubber layer 10 formed in the inner tube extrusion step to form the reinforcement layer 12 (braiding step), and a sheet of the hose rubber composition of this disclosure is inserted inside the reinforcement layer 12 to form the intermediate rubber layer 11. This is repeated a plurality of times to stack the reinforcement layers 14, 16, and 18 and the intermediate rubber layers 13, 15, and 17 in sequence. The outer surface rubber layer 19 made of the hose rubber composition of this disclosure is then formed (outer cover extrusion step). The outside of the outer surface rubber layer 19 formed in the outer cover extrusion step is coated with a suitable resin as appropriate (resin mold coating step), and the structure is vulcanized under predetermined conditions (vulcanization step). After the vulcanization, the coating resin is peeled away (resin mold peeling step), and the mandrel is removed (mandrel removal step). This produces the hose having the intermediate rubber layers 11, 13, 15, and 17 and the reinforcement layers 12, 14, 16, and 18 between the inner surface rubber layer 10 and the outer surface rubber layer 19.

### EXAMPLES

The following describes the presently disclosed tire in more detail through examples. However, the presently disclosed tire is not in any way limited by the following examples and suitable alterations may be made that do not change the essence thereof.

The polymers and rubber compositions described below were prepared. The methods of evaluating the rubber compositions are as follows. The unit of the values shown as the compounding amount in Tables 1 to 6 is parts by mass. In Tables 1 to 6, the rubber composition of each of the examples and comparative examples further includes (i) 5 parts by mass flowers of zinc (zinc oxide), (ii) 4 parts by mass magnesium oxide, (iii) 2 parts by mass wax (OZOACE-0017, manufactured by Nippon Seiro Co., Ltd.), (iv) 3 parts by mass an antioxidant (ANTIGENE6C, manufactured by Sumitomo Chemical Co., Ltd.), (v) 2 parts by mass cobalt stearate, (vi) 1 part by mass sulfur, and (vii) 2 parts by mass a vulcanization accelerator (NS), per 100 parts by mass of the rubber composition.

### <Evaluation method of rubber composition>

### (1) Flame retardance (flame response)

The flame retardance (flame response) was evaluated based on the flame retardance (flame response) evaluation of ASTP 5007 in the Mine Safety and Health Administration (MSHA) standard in the United States. The thickness of each evaluation sample obtained by press-vulcanizing a rubber sheet in a mold at 150°C for 60 minutes and cutting it to predetermined dimensions was 3 mm.

The evaluation results are shown in Tables 1 to 6. A smaller value as the flame response indicates better flame retardance.

The evaluation criteria are as follows.
Excellent: 0 second or more and 10 seconds or less
Good: more than 10 seconds and 30 seconds or less
Fair: more than 30 seconds and 60 seconds or less
Poor: more than 60 seconds

### (2) Dimensional stability (mill shrinkage test)

The dimensional stability (mill shrinkage test) was measured according to the following procedure.

A 6-inch roll adjusted to 60°C was used, wound and warmed for 2 minutes at 20 rpm with a roll gap being 2 mm. The roll was stopped, and a rubber wound onto the roll was subjected to die cutting with a square mold which is 5 cm on each side. After being left for 1 hour, a shrinkage ratio (%) was calculated by dividing a length shortened from 5 cm with 5 cm.

The evaluation results are shown in Tables 1 to 6.

The evaluation criteria are as follows.
Excellent: 10% or less
Good: more than 10% and 20% or less
Fair: more than 20% and 30% or less
Poor: more than 30%

### (3) Initial elongation (initial Eb (%))

The initial elongation (initial Eb (%)) was measured with a No. 3 dumbbell according to JIS K 6251, and was represented with a ratio (%) of an elongation at break when the specimen was broken with respect to the initiation.

The measurement results are shown in Tables 1 to 6. Here, a larger value of the initial elongation (initial Eb (%)) is better for improving the softness (crack resistance). Note that 300% or more is an acceptance standard.

**[Table 1]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Rubber component | Chloroprene rubber (CR)*1 | 50 | 60 | 65 | 65 | 65 | 65 | 65 | 60 | 60 | 60 |
| | Styrene-butadiene rubber (SBR)*2 | 50 | 40 | 35 | 35 | 35 | 35 | 35 | 40 | 40 | 40 |
| Filler | FEF Carbon black*3 | 75 | 75 | 75 | 70 | 65 | 60 | 50 | 75 | 75 | 75 |
| | FT Carbon black*4 | - | - | - | - | - | - | - | - | - | - |
| | HAF Carbon black*5 | - | - | - | - | - | - | - | - | - | - |
| | ISAF Carbon black*6 | - | - | - | - | - | - | - | - | - | - |
| | Silica*7 | 10 | 10 | 10 | 10 | 10 | 10 | 10 | 10 | 10 | 10 |
| Plasticizer | Spindle oil*8 | 5 | 5 | 5 | 5 | 5 | 5 | 5 | 10 | 18 | - |
| | Aroma oil*9 | 8 | 8 | 8 | 8 | 8 | 8 | 8 | 8 | - | 18 |
| | Chlorinated paraffin* 10 | - | - | - | - | - | - | - | - | - | - |
| | Non-halogenated phosphoric acid ester*11 | - | - | - | - | - | - | - | - | - | - |
| | Halogenated phosphoric acid ester*12 | - | - | - | - | - | - | - | - | - | - |
| Evaluation | Flame response (evaluation result) | Poor | Good | Excellent | Excellent | Excellent | Poor | Poor | Poor | Poor | Poor |
| | Flame response (seconds) | 165 | 15 | 3 | 3 | 8 | 98 | 110 | 175 | 180 | 170 |
| | Mill shrinkage | Excellent | Excellent | Excellent | Good | Fair | Fair | Poor | Excellent | Excellent | Excellent |
| | Initial Eb (%) | 230 | 230 | 220 | 250 | 270 | 300 | 420 | 340 | 330 | 330 |

**[Table 2]**

| | | Example 1 | Example 2 | Example 3 | Example 4 | Example 5 | Example 6 |
|---|---|---|---|---|---|---|---|
| Rubber component | Chloroprene rubber (CR)*1 | 60 | 60 | 60 | 60 | 60 | 60 |
| | Styrene-butadiene rubber (SBR)*2 | 40 | 40 | 40 | 40 | 40 | 40 |
| Filler | FEF Carbon black*3 | 75 | 75 | 75 | 75 | 75 | 75 |
| | FT Carbon black*4 | - | - | - | - | - | - |
| | HAF Carbon black*5 | - | - | - | - | - | - |
| | ISAF Carbon black*6 | - | - | - | - | - | - |
| | Silica*7 | 10 | 10 | 10 | 10 | 10 | 10 |
| Plasticizer | Spindle oil*8 | 5 | 5 | 5 | 5 | 5 | 5 |
| | Aroma oil*9 | 8 | 8 | 8 | 8 | 8 | 8 |
| | Chlorinated paraffin*10 | 2 | 5 | - | - | - | - |
| | Non-halogenated phosphoric acid ester*11 | - | - | 2 | 5 | - | - |
| | Halogenated phosphoric acid ester*12 | - | - | - | - | 2 | 5 |
| Evaluation | Flame response (evaluation result) | Excellent | Excellent | Good | Good | Good | Excellent |
| | Flame response (seconds) | 5 | 2 | 16 | 11 | 11 | 7 |
| | Mill shrinkage | Excellent | Excellent | Excellent | Excellent | Excellent | Excellent |
| | Initial Eb (%) | 310 | 330 | 300 | 340 | 310 | 330 |

**[Table 3]**

| | | Example 7 | Example 8 | Example 9 | Example 10 | Example 11 | Example 12 | Example 13 | Example 14 | Example 15 |
|---|---|---|---|---|---|---|---|---|---|---|
| Rubber component | Chloroprene rubber (CR)*1 | 60 | 60 | 60 | 60 | 60 | 60 | 60 | 60 | 60 |
| | Styrene-butadiene rubber (SBR)*2 | 40 | 40 | 40 | 40 | 40 | 40 | 40 | 40 | 40 |
| Filler | FEF Carbon black*3 | 70 | - | - | - | 70 | 70 | 65 | 65 | 65 |
| | FT Carbon black*4 | - | 70 | - | - | - | - | - | - | - |
| | HAF Carbon black*5 | - | - | 70 | - | - | - | - | - | - |
| | ISAF Carbon black*6 | - | - | - | 70 | - | - | - | - | - |
| | Silica*7 | 10 | 10 | 10 | 10 | 10 | 10 | 10 | 10 | 10 |
| Plasticizer | Spindle oil*8 | 5 | 5 | 5 | 5 | 5 | 5 | 5 | 5 | 5 |
| | Aroma oil*9 | 8 | 8 | 8 | 8 | 8 | 8 | 8 | 8 | 8 |
| | Chlorinated paraffin*10 | 5 | 5 | 5 | 5 | - | - | 5 | - | - |
| | Non-halogenated phosphoric acid ester*11 | - | - | - | - | 5 | - | - | 5 | - |
| | Halogenated phosphoric acid ester*12 | - | - | - | - | - | 5 | - | - | 5 |
| Evaluation | Flame response (evaluation result) | Excellent | Good | Excellent | Excellent | Good | Excellent | Good | Good | Good |
| | Flame response (seconds) | 4 | 14 | 5 | 3 | 17 | 8 | 12 | 20 | 13 |
| | Mill shrinkage | Good | Good | Excellent | Excellent | Good | Good | Fair | Fair | Fair |
| | Initial Eb (%) | 350 | 370 | 350 | 360 | 360 | 360 | 380 | 370 | 390 |

**[Table 4]**

| | | Example 16 | Example 17 | Example 18 | Example 19 | Example 20 | Example 21 | Example 22 | Example 23 | Example 24 | Example 25 |
|---|---|---|---|---|---|---|---|---|---|---|---|
| Rubber component | Chloroprene rubber (CR)*1 | 60 | 60 | 60 | 60 | 60 | 60 | 60 | 60 | 60 | 60 |
| | Styrene-butadiene rubber (SBR)*2 | 40 | 40 | 40 | 40 | 40 | 40 | 40 | 40 | 40 | 40 |
| Filler | FEF Carbon black*3 | 75 | 75 | 75 | 75 | 75 | 75 | 70 | 70 | 70 | 70 |
| | FT Carbon black*4 | - | - | - | - | - | - | - | - | - | - |
| | HAF Carbon black*5 | - | - | - | - | - | - | - | - | - | - |
| | ISAF Carbon black*6 | - | - | - | - | - | - | - | - | - | - |
| | Silica*7 | 10 | 10 | 10 | 10 | 10 | 10 | 10 | 10 | 10 | 10 |
| Plasticizer | Spindle oil*8 | - | - | - | - | - | - | 20 | 20 | - | - |
| | Aroma oil*9 | - | - | - | - | - | - | - | - | 20 | 20 |
| | Chlorinated paraffin*10 | 20 | - | - | 25 | - | - | 5 | - | 5 | - |
| | Non-halogenated phosphoric acid ester*11 | - | 20 | - | - | 25 | - | - | - | - | - |
| | Halogenated phosphoric acid ester*12 | - | - | 20 | - | - | 25 | - | 5 | - | 5 |
| Evaluation | Flame response (evaluation result) | Excellent | Good | Excellent | Excellent | Good | Excellent | Fair | Fair | Fair | Fair |
| | Flame response (seconds) | 2 | 21 | 5 | 1 | 23 | 6 | 38 | 36 | 35 | 42 |
| | Mill shrinkage | Excellent | Excellent | Excellent | Excellent | Excellent | Good | Good | Good | Good | Good |
| | Initial Eb (%) | 360 | 370 | 360 | 420 | 410 | 430 | 410 | 420 | 430 | 410 |

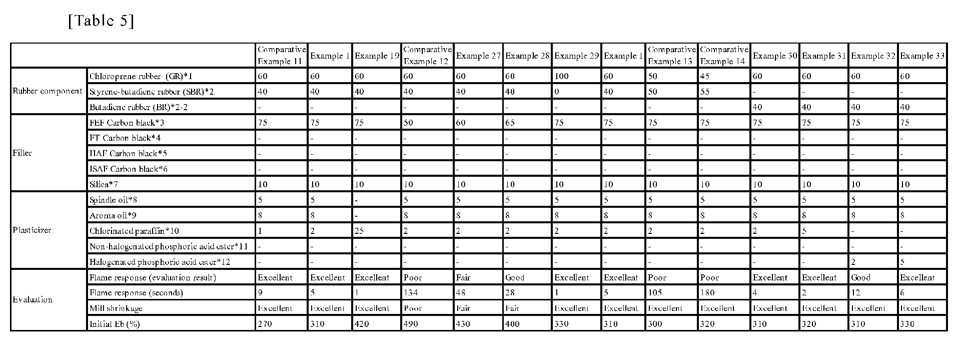

**[Table 6]**

| | | Example 1 | Example 34 |
|---|---|---|---|
| Rubber component | Chloroprene rubber (CR)*1 | 60 | 80 |
| | Styrene-butadiene rubber (SBR)*2 | 40 | 20 |
| Filler | FEF Carbon black*3 | 75 | 75 |
| | FT Carbon black*4 | - | - |
| | HAF Carbon black*5 | - | - |
| | ISAF Carbon black*6 | - | - |
| | Silica*7 | 10 | 10 |
| Plasticizer | Spindle oil*8 | 5 | 5 |
| | Aroma oil*9 | 8 | 8 |
| | Chlorinated paraffin*10 | 2 | 2 |
| | Non-halogenated phosphoric acid ester*11 | - | - |
| | Halogenated phosphoric acid ester*12 | - | - |
| Evaluation | Flame response (evaluation result) | Excellent | Excellent |
| | Flame response (seconds) | 5 | 1 |
| | Mill shrinkage | Excellent | Excellent |
| | Initial Eb (%) | 310 | 310 |

*1 to *12 in Tables 1 to 6 denote the following.
*1 Chloroprene rubber (CR): manufactured by Denki Kagaku Kogyo Kabushiki Kaisha, DENKA chloroprene "M40"
*2 Styrene-butadiene rubber (SBR): manufactured by JSR, "JSR1500"
*2-2 Butadiene rubber (BR): manufactured by JSR, "BR01" (cis-1,4 bond content of 95%)
*3 FEF carbon black: manufactured by Asahi Carbon Co., Ltd., "Asahi #65": iodine adsorption of 43 mg/g, DBP oil absorption of 121 mL/100 g
*4 FT carbon black: manufactured by Asahi Carbon Co., Ltd., "Asahi Thermal": iodine adsorption of 27 mg/g, DBP oil absorption of 28 mL/100 g
*5 HAF carbon black: manufactured by Asahi Carbon Co., Ltd., "Asahi #70": iodine adsorption of 82 mg/g, DBP oil absorption of 102 L/100 g
*6 ISAF grade carbon black: manufactured by Tokai Carbon Co., Ltd., "Seast 6": iodine adsorption of 120 mg/g, DBP oil absorption of 115 mL/100g
*7 Silica: manufactured by Tosoh Silica Corporation, "Nipsil AQ"
*8 Spindle oil: manufactured by JX Nippon Oil & Energy Corporation, "Super Oil Y22"
*9 Aroma oil: manufactured by Idemitsu Kosan Co., Ltd., "Diana Process Oil AH-58"
*10 Chlorinated paraffin (flame retardant plasticizer): manufactured by Ajinomoto Fine-Techno Co., Inc., "Empara K-43": chlorination ratio of 43%
*11 Non-halogenated phosphate ester (flame retardant plasticizer): manufactured by Hodogaya Chemical Co., Ltd., "TCP"
*12 Halogenated phosphate ester (flame retardant plasticizer): manufactured by Daihachi Chemical Industry Co., Ltd., "DAIGUARD-540"

As can be understood from Tables 1 to 6, Examples 1 to 34 in which the hose rubber composition includes: a rubber component including 60 parts by mass or more chloroprene rubber in 100 parts by mass of the rubber component; more than 50 parts by mass carbon black per 100 parts by mass of the rubber component; and 2 parts by mass or more of the flame retardant plasticizer per 100 by mass of the rubber component are capable of achieving both the softness after vulcanization and the dimensional stability during extrusion manufacture while ensuring the flame retardance, as compared with Comparative Examples 1 to 14 which do not meet the above-mentioned requirements.

### INDUSTRIAL APPLICABILITY

The disclosed hose rubber composition is suitable for use in, for example, an intermediate rubber layer and/or outer surface rubber layer of a hydraulic hose of a hydraulic excavator used in a mine such as a coal mine.

### REFERENCE SIGNS LIST

- 1: hose
- 10: inner surface rubber layer
- 11, 13, 15, 17: intermediate rubber layer
- 12, 14, 16, 18: reinforcement layer
- 19: outer surface rubber layer

## Claims

1. A hose rubber composition comprising a rubber component, a carbon black and a plasticizer component, wherein:
a chloroprene rubber is contained at an amount of 60 parts by mass or more in 100 parts by mass of the rubber component;
the carbon black is compounded at an amount of more than 50 parts by mass per 100 parts by mass of the rubber component; and
the plasticizer component contains a flame retardant plasticizer, the flame retardant plasticizer being compounded at an amount of 2 parts by mass or more per 100 parts by mass of the rubber component.

2. The hose rubber composition according to claim 1, wherein:
the flame retardant plasticizer is at least any one among a chlorinated aliphatic compound and a phosphate ester compound.

3. The hose rubber composition according to claim 2, wherein:
the flame retardant plasticizer is at least any one among a chlorinated paraffin and a halogenated phosphate ester compound.

4. The hose rubber composition according to any one of claims 1 to 3, wherein:
the flame retardant plasticizer is compounded at an amount of 2 parts to 25 parts by mass per 100 parts by mass of the rubber component.

5. The hose rubber composition according to any one of claims 1 to 4, wherein:
the carbon black is compounded at an amount of 65 parts by mass or more per 100 parts by mass of the rubber component.

6. The hose rubber composition according to any one of claims 1 to 5, wherein:
the carbon black has an iodine adsorption of 20 to 160 mg/g and a DBP oil absorption of 30 to 150 mL/100g.

7. The hose rubber composition according to claim 6, wherein:
the carbon black has an iodine adsorption of 40 to 60 mg/g and a DBP oil absorption of 100 to 130 mL/100g.

8. The hose rubber composition according to any one of claims 1 to 7, wherein:
the rubber component further contains at least any one among a styrene-butadiene rubber and a butadiene rubber.

9. The hose rubber composition according to any one of claims 1 to 8, wherein:
silica is further compounded at an amount of 5 parts to 25 parts by mass per 100 parts by mass of the rubber component.

10. A hose comprising a rubber layer using the hose rubber composition according to any one of claims 1 to 9.
